# EUROPÄISCHE PATENTANMELDUNG

(11) **EP 4 311 897 A1**
(43) Veröffentlichungstag der Anmeldung: **31.01.2024**
(21) Anmeldenummer: 23187066.8
(22) Anmeldetag: 21.07.2023
(51) Int. Cl.: E04G 21/08

(54) **VERDICHTUNGSSYSTEM MIT BESTIMMUNG DES VERDICHTUNGSFORTSCHRITTS**

(30) Priorität: 25.07.2022 DE 102022118541
(71) Anmelder: Wacker Neuson Produktion GmbH & Co. KG, 85084 Reichertshofen (DE)
(72) Erfinder: LANGE, Christian, 85051 Ingolstadt (DE); DILLER, Patrick, 86558 Hohenwart (DE); SIBILA, Dirk, 82272 Moorenweis (DE); BERGER, Rudolf, 82031 Grünwald (DE); WEISKOPF, Alto, 85250 Altomünster (DE); MARTIN, Markus, 86919 Utting (DE)
(74) Vertreter: Müller Hoffmann & Partner

(57) **Zusammenfassung**

Es wird Verdichtungssystem zum Verdichten eines Mediums angegeben, mit einer Verdichtungsvorrichtung (1) mit einem Elektromotor (5) zum Erzeugen einer Verdichtungsbewegung, mit einer Energievorrichtung (2) zum Bereitstellen von elektrischer Energie für den Elektromotor (5), mit einer Messeinrichtung (13) zum Messen eines von dem Elektromotor (5) bezogenen Stroms, und mit einer Auswerteeinrichtung (16) zum Auswerten des von der Messeinrichtung (13) gemessenen Strombezugs und daraus Bestimmen eines Verdichtungsfortschritts im zu verdichtenden Medium, wobei die Auswerteeinrichtung (16) wenigstens teilweise in einer externen Einrichtung (15) angeordnet ist, räumlich getrennt von der Energieeinrichtung (2) und/oder der Verdichtungsvorrichtung (1).

## Beschreibung

Die Erfindung betrifft ein Verdichtungssystem zum Verdichten eines Mediums, mit dessen Hilfe unter anderem während des Verdichtungsvorgangs der Verdichtungsfortschritt bestimmt werden kann.

Ein derartiges Verdichtungssystem eignet sich insbesondere in einer Ausführung als Betonverdichtungssystem zum Verdichten von noch fließfähigem Beton, wie z.B. eine Innenrüttelvorrichtung (Innenrüttler). In einer anderen Ausführungsform kann das Verdichtungssystem als Bodenverdichtungssystem ausgebildet sein, z.B. mit einer Vibrations- oder Rüttelplatte oder einem Stampfer zur Bodenverdichtung.

Betonverdichtungssysteme, insbesondere sogenannte Innenrüttler sind bekannt. Sie weisen einen in einer sogenannten Rüttelflasche (Rüttelgehäuse) angeordneten Unwuchterreger auf, der in den zu verdichtenden, noch fließfähigen Beton eingetaucht wird, um diesen durch Einbringen von Vibrationen zu verdichten.

Der Unwuchterreger wird in der Regel durch einen ebenfalls in der Rüttelflasche angeordneten Elektromotor drehend angetrieben. Dazu muss der Elektromotor mit einem geeigneten Strom, insbesondere mit einer geeigneten Spannung und einer geeigneten Frequenz versorgt werden. Zu diesem Zweck ist ein Frequenzumformer vorgeschaltet, der den zugeführten Strom in geeigneter Weise wandelt. Dabei kann die elektrische Energieversorgung über das öffentliche bzw. an einer Baustelle vorhandene Stromnetz erfolgen.

In jüngerer Vergangenheit hat sich jedoch die Akkutechnik derart weiterentwickelt, dass die elektrische Energieversorgung auch mit Hilfe eines elektrischen Energiespeichers (Akkus) erfolgen kann.

Aus der DE 10 2018 118 552 A1 ist eine Tragvorrichtung mit Energiespeicher und elektrischem Umformer bekannt. Die Tragvorrichtung kann in der Art eines Rucksacks ausgebildet sein und einen Akku sowie einen Umformer aufweisen, um z.B. einen Innenrüttler mit geeignetem elektrischem Strom zu versorgen.

Der Innenrüttler selbst weist einen Bedienungsschlauch auf, an dem die Rüttelflasche befestigt ist und der vom Bediener gehalten werden kann, um die Rüttelflasche in den zu verdichtenden Beton einzutauchen. Im Inneren des Bedienungsschlauchs verlaufen auch die elektrischen Zuleitungen zu dem Elektromotor in der Rüttelflasche. Dementsprechend dient der Bedienungsschlauch auch als Schutzschlauch. Am Übergang zwischen dem Ende des Bedienungsschlauchs und dem zum Frequenzumformer führenden Verbindungskabel befindet sich ein Schalter, mit dem der Bediener den Innenrüttler aktivieren und deaktivieren kann.

Das z.B. als Rucksack tragbare Akkusystem kann für eine Vielzahl von Geräten verwendet werden, darunter auch ein tragbarer Frequenzumformer zum Betrieb eines Innenrüttlers. Dabei kann das Akkusystem mit dem Frequenzumformer kommunizieren.

Aus der EP 2 574 916 A2 ist eine Vorrichtung zum Aufzeichnen des Ortes und der Dauer eines Verdichtungsvorgangs bei einem Innenrüttler bekannt. Dabei ist es möglich, das Verdichtungsergebnis anhand der Einschaltdauer des Innenrüttlers zu beurteilen. Die Einschaltdauer erlaubt jedoch nur Rückschlüsse auf die Qualität der Verdichtung. Eine Unterscheidung verschiedener Arbeitszustände und eine Berücksichtigung der tatsächlichen Verdichtung erfolgt nicht, so dass die Verdichtungsqualität letztlich nur sehr ungenau bestimmt werden kann. Zudem sind zusätzliche Messsysteme erforderlich.

Der Erfindung liegt die Aufgabe zugrunde, ein Verdichtungssystem zum Verdichten eines Mediums anzugeben, das es ermöglicht, einen jeweiligen Arbeitszustand zu erkennen und den Verdichtungsvorgang zu beurteilen. Dazu soll ein Minimum an zusätzlichen Hardwarekomponenten notwendig sein, so dass im Wesentlichen auf bestehende Hardware zurückgegriffen werden kann. Insbesondere soll der Einsatz von zusätzlichen Messsystemen vermieden werden.

Die Aufgabe wird erfindungsgemäß gelöst durch ein Verdichtungssystem mit den Merkmalen von Anspruch 1. Vorteilhafte Ausgestaltungen sind in den abhängigen Ansprüchen angegeben.

Es wird ein Verdichtungssystem zum Verdichten eines Mediums angegeben, mit einer Verdichtungsvorrichtung mit einem Elektromotor zum Erzeugen einer Verdichtungsbewegung; einer Energievorrichtung zum Bereitstellen von elektrischer Energie für den Elektromotor; einer Messvorrichtung zum Messen eines von dem Elektromotor bezogenen Stroms; und mit einer Auswerteeinrichtung zum Auswerten des von der Messeinrichtung gemessenen Strombezugs und daraus Bestimmen eines Verdichtungsfortschritts im zu verdichtenden Medium; wobei die Auswerteeinrichtung wenigstens teilweise in einer externen Einrichtung angeordnet ist, räumlich getrennt von der Energievorrichtung und/oder der Verdichtungsvorrichtung.

Als zu verdichtendes Medium können dabei Beton oder Boden bearbeitet werden, so dass es sich je nach Anwendungsfall um eine Beton- oder Bodenverdichtung handeln kann.

Dementsprechend kann die Verdichtungsvorrichtung einen Unwuchterreger aufweisen, z.B. mit einer oder mehreren Unwuchtwellen, die durch den Elektromotor in Rotation versetzt werden. In der Folge davon entstehen starke Vibrationskräfte, die in geeigneter Weise in das zu verdichtende Medium eingeleitet werden können.

Im Falle einer Betonverdichtung können der Elektromotor und der Unwuchterreger in einem Rüttelgehäuse, einer sogenannten Rüttelflasche, angeordnet sein, die mit Hilfe eines Schutz- und Bedienungsschlauchs in den zu verdichtenden Beton eingehängt wird. Die Vibrationen des Unwuchterregers werden über die Rüttelflasche in den Beton zu dessen Verdichtung übertragen.

Bei einer Bodenverdichtungsvorrichtung kann der Unwuchterreger eine oder häufig auch zwei (oder mehr) Unwuchtwellen aufweisen. Die dabei entstehenden Vibrationskräfte werden über eine Bodenkontaktplatte in den zu verdichtenden Boden eingeleitet.

Die Energievorrichtung kann eine Batterie (Akku) aufweisen oder auch einen Netzanschluss bereitstellen, zum Anschluss des Elektromotors an das öffentliche Netz.

Die Messeinrichtung kann insbesondere zum Messen von elektrischem Strom, aber auch elektrischer Spannung oder elektrischer Leistung ausgebildet sein. Dadurch lässt sich als zentrales Messkriterium die vom Elektromotor bezogene elektrische Leistung erfassen, die Rückschlüsse auf den Verdichtungsvorgang und insbesondere den Verdichtungsfortschritt erlaubt.

Während des Betriebs des Elektromotors kann das Messen mit einem geeigneten Abtastintervall von z.B. weniger als 5 s erfolgen, insbesondere weniger als 2 s, weniger als 1 s, weniger als 0,5 s oder auch weniger als 1/10 s.

Die Auswerteeinrichtung kann aufgrund des von der Messeinrichtung gemessenen Strombezugs Rückschlüsse auf die Verdichtung und damit auf den Verdichtungsfortschritt in dem zu verdichtenden Medium schließen. Insbesondere kann die Auswerteeinrichtung die erfassten Strommesswerte und Strommesswertverläufe in Relation zu vorbekannten Kriterien und Profilen setzen und daraus Rückschlüsse ziehen. Dies ist auch durch Auswertung der Stromgradienten Änderung der Stromaufnahme über die Zeit) möglich.

Die Auswerteeinrichtung ist zumindest teilweise in einer externen Einrichtung angeordnet, die räumlich getrennt ist von der Energieeinrichtung und/oder der Verdichtungsvorrichtung. Die externe Einrichtung kann eine Mobileinrichtung sein, die räumlich getrennt von der Energievorrichtung und der Verdichtungsvorrichtung vorgesehen ist. Bei der externen Einrichtung kann es sich insbesondere um eine Mobilfunkeinrichtung, ein Smartphone, ein Tablet, ein Computer (auch tragbarer Computer) handeln. Ebenso ist eine Datenübertragung ins Internet für eine Cloudanwendung möglich. Z.B. kann die Auswerteeinrichtung eine Lösung auf Basis von künstlicher Intelligenz umfassen, die auf einer externen Hardware, z.B. auch in einer Cloud bereitgestellt wird. Dadurch kann mit Hilfe der externen Einrichtung Rechenkapazität bereitgestellt werden, mit deren Hilfe die Auswerteeinrichtung sehr präzise und sehr effizient den Arbeitszustand und den Verdichtungsfortschritt bestimmen kann. Durch das Bereitstellen der Rechenkapazität mit Hilfe der externen Einrichtung ist es nicht erforderlich, die Rechenkapazität unmittelbar an der Verdichtungsvorrichtung oder der Energievorrichtung bereitzustellen. Vielmehr können diese Vorrichtungen im Wesentlichen in herkömmlicher Weise aufgebaut sein.

Die Energievorrichtung kann eine Batterie (insbesondere einen Akku) aufweisen, wobei die Batterie eine Batterie-Steuerelektronik aufweisen kann, die räumlich eine Einheit mit der Batterie bildet, und wobei die Messeinrichtung wenigstens teilweise in die Batterie-Steuerelektronik integriert ist. Die Batterie-Steuerelektronik stellt üblicherweise ein Batteriemanagementsystem dar, das zur Überwachung der Batterie vorgesehen ist, um eine effektive und sichere Ladung der Batterie, aber auch eine schonende Entladung der Batterie zu steuern und zu regeln.

Die Batterie-Steuerelektronik weist in der Regel eine Messeinrichtung zum Erfassen des von der Batterie bezogenen Stroms auf. Diese Messeinrichtung stellt einen Teil des erfindungsgemäßen Verdichtungssystems dar. Somit ist keine zusätzliche Messeinrichtung erforderlich, da die Messeinrichtung bereits durch die ohnehin vorhandene Batterie bereitgestellt wird.

Die Energievorrichtung kann weiterhin einen Umformer aufweisen, zum Umwandeln eines von der Energievorrichtung bezogenen Stroms in einen für den Elektromotor geeigneten Strom, wobei der Umformer eine Umformer-Steuerelektronik aufweist, die räumlich eine Einheit mit dem Umformer bildet, und wobei die Messeinrichtung wenigstens teilweise in die Umformer-Steuerelektronik integriert ist. Der Umformer kann insbesondere ein Frequenzumrichter sein, um den Elektromotor mit geeignetem Strom und geeigneter Spannung zu versorgen. Auch die Umformer-Steuerelektronik kann ausgebildet sein, um auch ihrerseits die erfindungsgemäße Messeinrichtung bereitzustellen und damit den Strombezug durch den Elektromotor präzise und mit hoher Abtastrate zu erfassen. Gegebenenfalls kann die Messeinrichtung auch auf die Steuerelektroniken von Batterie und Umformer verteilt werden bzw. durch diese gemeinsam gebildet werden.

Je nach Ausgestaltung kann die Energievorrichtung auch eine Einheit mit Batterie und Umformer aufweisen, die durch eine gemeinsame Steuerelektronik angesteuert werden.

Die Auswerteeinrichtung kann ausgebildet sein zum Bestimmen eines Arbeitszustands der Verdichtungsvorrichtung aufgrund des jeweils aktuell durch die Messeinrichtung erfassten elektrischen Stroms.

Die Verdichtungsvorrichtung kann als Betonverdichtungsvorrichtung ausgebildet sein, mit einem Rüttelgehäuse zum Eintauchen in fließfähigen Beton; einem durch einen Elektromotor angetriebenen Unwuchterreger, der in dem Rüttelgehäuse angeordnet ist; einer als Messeinrichtung dienenden Stromerfassungseinrichtung zum Erfassen des elektrischen Stroms, der durch den Elektromotor aufgenommen wird; und mit einer Auswerteeinrichtung zum Bestimmen eines Arbeitszustands der Betonverdichtungsvorrichtung aufgrund des jeweils aktuell erfassten elektrischen Stroms; wobei der Arbeitszustand ausgewählt ist aus der Gruppe Positionieren des Rüttelgehäuses in der Luft (Betreiben des Elektromotors im Leerlauf), Eintauchen des Rüttelgehäuses in den Beton, Durchführen eines Verdichtungsvorgangs mit dem Rüttelgehäuse eingetaucht im Beton, Austauchen des Rüttelgehäuses aus dem Beton; und wobei die Auswerteeinrichtung ausgebildet ist, um sämtliche der genannten Arbeitszustände zu erkennen.

Die Arbeitszustände können somit insbesondere aufgrund des jeweils genau erfassten Stromverlaufs mit entsprechend hoher Abtastrate erkannt werden. Dabei spielt nicht nur der jeweils aktuelle Stromwert, sondern auch die Änderung der Stromwerte über die Zeit (z.B. mit Hilfe der Abtastrate erfassbar) eine Rolle, so dass jeweils spezifische Stromprofile erfasst und erkannt werden können. Aufgrund der Tendenz des Stromverlaufs kann die Auswerteeinrichtung die verschiedenen Arbeitszustände erkennen und - soweit sinnvoll - auch voneinander unterscheiden. Dazu kann das jeweils aktuell erfasste Stromprofil, mit Stromwerten und Stromverläufen bzw. -gradienten, z.B. mit bekannten Werten bzw. Mustern verglichen werden, um daraus Rückschlüsse auf den jeweiligen Arbeitszustand ziehen zu können.

Dabei sind die Arbeitszustände "Positionieren des Rüttelgehäuses an der Luft" und "Betreiben des Elektromotors im Leerlauf" als identisch anzusehen. In diesem Fall befindet sich das Rüttelgehäuse noch an der Luft und ist noch nicht in den Beton eingetaucht. Der Elektromotor kann dabei im Leerlauf bzw. annähernd im Leerlauf betrieben werden, da sich der Unwuchterreger noch frei drehen lässt.

Die Verdichtungsarbeit beginnt mit dem Arbeitszustand "Eintauchen des Rüttelgehäuses in den Beton". Dabei wird das Rüttelgehäuse sukzessive in den fließfähigen Beton abgesenkt, der die Schwingungen des Rüttelgehäuses aufnimmt und dämpft. In dem Zug wird die Stromaufnahme durch den Elektromotor erhöht, um den Unwuchterreger nach wie vor antreiben zu können.

Bei dem Arbeitszustand "Durchführen eines Verdichtungsvorgangs" ist das Rüttelgehäuse weitgehend vollständig in den Beton eingetaucht und wird von dem Anwender an einer Stelle im Wesentlichen stationär festgehalten, so dass das Rüttelgehäuse im Beton verweilt. Aufgrund der Verdichtungseffekte im Beton ändert sich die Dämpfungswirkung des Betons auf das Rüttelgehäuse, was sich wiederum in Form von auf den Unwuchterreger wirkenden Gegenkräften bzw. Gegenmomenten auswirkt. Dadurch ändert sich die Stromaufnahme durch den Elektromotor, was durch die Auswerteeinrichtung erfasst werden kann.

Beim Arbeitszustand "Austauchen des Rüttelgehäuses aus dem Beton" wird das Rüttelgehäuse aus dem Beton herausgezogen und angehoben. Dies führt dazu, dass das Rüttelgehäuse zunehmend freier vibrieren kann, da die dämpfende Wirkung des Betons sukzessive nachlässt. Dementsprechend kann der Elektromotor auch wieder frei drehen, so dass die von ihm aufgenommene Leistung vermindert und der Stromverbrauch verringert wird.

Die Auswerteeinrichtung kann mit Hilfe der jeweils abgetasteten Stromwerte und der Gradienten der Stromwerte bzw. der Tendenz der Stromwertentwicklung erkennen, in welchem Arbeitszustand sich der Innenrüttler jeweils befindet. Während des Verdichtungsvorgangs ("Durchführen eines Verdichtungsvorgangs") kann die Auswerteeinrichtung aufgrund des Stromprofils, also der Stromwerte und des Gradientenverlaufs, den Verdichtungszustand des Betons erkennen und z.B. mit Grenzwerten vergleichen. Wenn ein bestimmter Grenzwert erreicht ist, wird dies als Kriterium gewertet, dass der Beton an dieser Stelle ausreichend verdichtet wurde.

Als weitere Arbeitszustände können bei einer Variante durch die Auswerteeinrichtung die Arbeitszustände "Elektromotor ausgeschaltet" sowie "Elektromotor und/oder Unwuchterreger defekt" erkannt werden. In diesem Fall nimmt der Elektromotor entweder keinen Strom auf oder es wird eine Stromaufnahme bzw. ein Stromprofil erkannt, das nicht in die Schemata für die normalen Arbeitszustände passt, z.B. eine zu geringe oder eine zu hohe Stromaufnahme.

Die Stromerfassungseinrichtung kann ausgebildet sein, um zusätzlich zu dem Strom auch die am Elektromotor anliegende elektrische Spannung zu erfassen. Damit lässt sich die Messgenauigkeit weiter erhöhen.

Die Auswerteeinrichtung kann ausgebildet sein, um den jeweiligen Arbeitszustand unter Berücksichtigung des jeweils aktuell erfassten Stromprofils mit einem aktuell erfassten elektrischen Strom und/oder einem jeweils bestimmbaren Stromgradienten zu bestimmen. Der Stromgradient ist dabei eine Änderung des aktuellen Stromwerts über die Zeit. Je nach erfasstem absolutem Stromwert, gegebenenfalls in Verbindung mit dem Stromgradienten kann die Auswerteeinrichtung somit den Arbeitszustand und auch den Verdichtungsgrad im Beton erfassen. Dabei können Stromwert und Stromgradient gemeinsam oder auch separat ausgewertet werden. Ein Beispiel für die Auswertung wird später im Rahmen der Figurenbeschreibung erläutert.

Es kann eine Interpretationseinrichtung vorgesehen sein, zum Interpretieren des Stromverlaufs, während der Arbeitszustand "Durchführen eines Verdichtungsvorgangs" erkannt wird, wobei die Interpretationseinrichtung ausgebildet sein kann, um für das Interpretieren des Stromverlaufs den jeweils aktuellen Stromgradienten auszuwerten, und wobei eine Annäherung des Stromgradienten an den Werten Null als Kriterium für einen Verdichtungsfortschritt gilt. Eine Annäherung des Stromgradienten gegen Null bedeutet, dass die Kurve des aktuellen Stromverlaufs flacher wird. Dies kann im Verlauf des Verdichtungsvorgangs beobachtet werden, wobei eine Annäherung des Stromgradienten gegen Null bedeutet, dass sich der jeweils aktuell aufgenommene Strom kaum noch ändert. Dies wird als Kriterium dafür gewertet, dass der Beton im Bereich der Rüttelflasche ausreichend verdichtet wurde.

Die Auswerteeinrichtung kann ausgebildet sein zum Erkennen, ob ein vorgegebener Verdichtungsfortschritt erreicht wurde. Hierzu können verschiedene Kriterien vordefiniert sein, bei welchen Stromprofilen bzw. -verläufen und -gradienten, welcher Verdichtungsfortschritt erreicht wurde.

Es kann eine Interpretationseinrichtung vorgesehen sein, zum Interpretieren des Stromverlaufs, während der Arbeitszustand "Durchführen eines Verdichtungsvorgangs" erkannt wird, wobei die Interpretationseinrichtung ausgebildet sein kann, um für das Interpretieren des Stromverlaufs den jeweils aktuellen Stromgradienten auszuwerten, und wobei eine Annäherung des Stromgradienten an den Werten Null als Kriterium für einen Verdichtungsfortschritt gilt. Eine Annäherung des Stromgradienten gegen Null bedeutet, dass die Kurve des aktuellen Stromverlaufs flacher wird. Dies kann im Verlauf des Verdichtungsvorgangs beobachtet werden, wobei eine Annäherung des Stromgradienten gegen Null bedeutet, dass sich der jeweils aktuell aufgenommene Strom kaum noch ändert. Dies wird als Kriterium dafür gewertet, dass der Beton im Bereich der Rüttelflasche ausreichend verdichtet wurde.

Dabei kann ein Grenzwert für die Annäherung des Stromgradienten an den Wert Null vorgegeben sein, wobei eine Signaleinrichtung vorgesehen sein kann, zum Erzeugen eines Signals für einen Bediener bei Erreichen des Grenzwerts durch den Stromgradienten. Es ist somit nicht zwingend erforderlich, dass der Stromgradient tatsächlich den Wert Null erreicht. Vielmehr kann eine Annäherung an den Wert Null und damit ein Erreichen des Grenzwerts ausreichend sein. Das Erreichen des Grenzwerts bedeutet, dass an der Stelle der Beton ausreichend verdichtet wurde. Dieser Zustand kann durch die Interpretationseinrichtung festgestellt werden, die daraufhin über die Signaleinrichtung dem Bediener ein Signal gibt, dass der Beton ausreichend verdichtet wurde, so dass der Bediener das Rüttelgehäuse an eine andere Stelle im Beton bewegen kann.

Die Auswertung der von der Messeinrichtung erfassten Messergebnisse kann eine nicht unerhebliche Rechnerkapazität erfordern, die an der Messeinrichtung, an dem Energiespeicher oder an dem Frequenzumformer nicht vorhanden ist. Demgegenüber sind Smartphone, Laptop oder Tablet ohne Weiteres geeignet, ausreichende Rechnerkapazitäten zur Verfügung zu stellen. Die erforderlichen Rechnerkapazitäten hängen insbesondere von dem Rechenmodell ab, das der Erkennung des Verdichtungsfortschritts zugrundegelegt wird. Geht man davon aus, dass Verläufe von Strombezügen über einen gewissen Zeitraum ausgewertet werden sollen, können sehr viele Daten anfallen, die eine höhere Rechnerkapazität erfordert. Ebenso ist es denkbar, dass die Auswerteeinrichtung auch zumindest in Teilen ein KI-basiertes System nutzt, um aufgrund der während der Betonverdichtung entstehenden Muster im Stromverbrauch Rückschlüsse über den Verdichtungsgrad zu ziehen.

Wie oben dargelegt, ist es daher vorteilhaft, die Auswerteeinrichtung wenigstens teilweise auf der externen Einrichtung, z.B. einer Mobileinrichtung, auszulagern. Die Mobileinrichtung kann insbesondere unabhängig vom Energiespeicher oder vom Umformer bewegt werden.

Es kann eine Kommunikationsschnittstelle zwischen der Messeinrichtung und der Auswerteeinrichtung vorgesehen sein, zum Hin- und/oder Rückübertragen von Daten zwischen der Messeinrichtung und der Auswerteeinrichtung. Die Kommunikation kann somit ein- oder bidirektional erfolgen. Für die Datenübertragung der Kommunikationsschnittstelle kann eine Funkstrecke genutzt werden, z.B. Bluetooth, WLAN oder Mobilfunk.

Wenn die Messeinrichtung in die Energievorrichtung integriert ist, kann die Datenübertragung entsprechend über die Kommunikationsschnittstelle zwischen der Energievorrichtung und der Auswerteeinrichtung vorgesehen sein. Die Daten betreffen insbesondere die Erkennung des Verdichtungsfortschritts bzw. werden zur Bestimmung des Verdichtungsfortschritts genutzt.

Wenn die Messeinrichtung in der Energievorrichtung vorgesehen ist, kann die Messeinrichtung die Daten über die Kommunikationsschnittstelle an die externe Einrichtung schicken.

Je nach Anordnung von Messeinrichtung und Auswerteeinrichtung ist die Kommunikation zwischen der Batterie und der externen Einrichtung oder dem Umformer und der externen Einrichtung möglich. Wenn die Messeinrichtung am Umformer angeordnet ist, können zudem auch die Daten von der Messeinrichtung an die Batterie-Steuerelektronik übermittelt werden, die ihrerseits einen Teil der Kommunikationsschnittstelle aufweist und insoweit als Gateway für die Datenübertragung zur externen Einrichtung dienen kann.

Die externe Einrichtung kann eine Mensch-Maschine-Schnittstelle aufweisen, zum Anzeigen von Information für einen Bediener und/oder zum Abfragen von Information von dem Bediener. Die Mensch-Maschine-Schnittstelle kann z.B. als App ausgebildet sein und auf der externen Einrichtung installiert sein. Dabei ist es möglich, die gemessenen Werte in aufbereiteter Form anzuzeigen, z.B. den Verdichtungsfortschritt, aber auch die Betonkonsistenz oder den Typ der verwendeten Verdichtungsvorrichtung. Umgekehrt sind auch Bedienereingaben möglich, um Parameter in dem Verdichtungssystem einzustellen.

Es kann eine Signaleinrichtung vorgesehen sein, zum Erzeugen eines Signals für den Bediener, wobei die Signaleinrichtung ausgebildet sein kann, um das Signal in Abhängigkeit von einem Verfahrenszustand zu erzeugen, und wobei der Verfahrenszustand ausgebildet sein kann aus der Gruppe Verdichtungsziel erreicht, Verdichtungsziel noch nicht erreicht, Verdichtung fehlerhaft, Fehlermeldung. Die Signaleinrichtung kann durch die Auswerteeinrichtung angesteuert werden, um Ergebnisse, die von der Auswerteeinrichtung bestimmt worden sind, in Form von Signalen oder Warnhinweisen an den Bediener zu übermitteln. Dazu kann die Signaleinrichtung z.B. optische, akustische oder mechanische (haptische) Signale erzeugen, die vom Bediener im Betrieb des Verdichtungssystems gut wahrgenommen werden können. Der Bediener kann auf diese Weise sehr einfach über den Fortschritt seiner Arbeit informiert werden. Dies ist insbesondere dann interessant, wenn dem Bediener übermittelt wird, dass er sein Verdichtungsziel erreicht hat. Solange dies nicht der Fall ist, muss er die Verdichtung fortführen. Sobald er aber das Ziel erreicht hat, kann er die Verdichtung an anderer Stelle durchführen.

Die Signaleinrichtung kann z.B. an der externen Einrichtung angeordnet sein. Ebenso ist es aber auch möglich, die Signaleinrichtung an der Energievorrichtung oder der Verdichtungsvorrichtung vorzusehen.

Es kann eine Dokumentationseinrichtung vorgesehen sein, zum Aufzeichnen von Daten, die durch die Messeinrichtung und die Auswerteeinrichtung generiert worden sind. Beim Durchführen eines Verdichtungsvorgangs können sehr viele Daten anfallen, die durch die Dokumentationseinrichtung in geeigneter Weise aufgezeichnet werden können. Dabei kann es sich um die reinen (rohen) Messergebnisse handeln. Ebenso ist es aber auch möglich, die von der Auswerteeinrichtung bestimmten Daten und Schlussfolgerungen aufzuzeichnen.

Insbesondere kann dabei auch die Anzahl der Verdichtungsvorgänge und eine Bewertung der Verdichtungsvorgänge aufgezeichnet werden. Zudem können Positionsdaten, insbesondere der Verdichtungsvorrichtung, gespeichert werden, wenn diese während des Verdichtungsvorgangs erfasst werden. Bei diesen Positionsdaten kann es sich z.B. um GPS-Daten handeln.

Die Dokumentation kann über bzw. mit Hilfe der externen Einrichtung erfolgen, z.B. auf der externen Einrichtung selbst oder auch unter Nutzung einer von der externen Einrichtung bereitgestellten Internetverbindung. In letzterem Fall können die Daten dann direkt auf einem Cloudserver gespeichert werden. Das erlaubt z.B. eine zentrale Dokumentation aller Verdichtungsvorgänge übergreifend auf einer Baustelle.

Es kann eine Identifikationseinrichtung vorgesehen sein, zum Identifizieren der Verdichtungsvorrichtung aufgrund von vordefinierten Profilen für den Stromverlauf. Insbesondere können z.B. bei einem Betonverdichtungssystem die Verdichtungsvorrichtung ausgetauscht werden und Verdichtungsvorrichtungen mit verschiedenen Rüttelflaschen angekoppelt werden. Anhand hinterlegter Profile für den Stromverlauf (Lauf an Luft, Stromanstieg im Beton) kann die Identifikationseinrichtung erkennen, welcher Rüttelflaschentyp aktuell angeschlossen ist. Dazu ist dann eine separate Nutzereingabe erforderlich, sofern die betreffenden Innenrüttler dem System bekannt sind.

Diese und weitere Vorteile und Merkmale der Erfindung werden nachfolgend anhand von Beispielen unter Zuhilfenahme der Figuren näher erläutert. Es zeigen:
- **Fig. 1**: ein als erfindungsgemäßes Verdichtungssystem dienendes Betonverdichtungssystem in schematischer Darstellung;
- **Fig. 2**: eine Variante zu dem Verdichtungssystem von Fig. 1; und
- **Fig. 3**: ein Beispiel für die Änderung der Stromaufnahme in Abhängigkeit von unterschiedlichen Arbeitszuständen einer Betonverdichtungsvorrichtung.

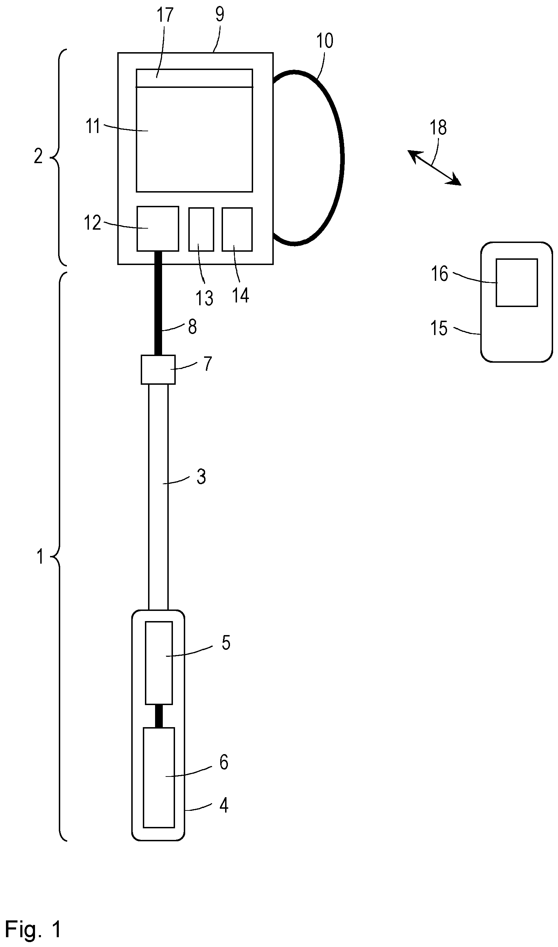

Fig. 1 zeigt in schematischer Darstellung ein als Verdichtungssystem dienendes Betonverdichtungssystem mit einem Innenrüttler 1 und einer tragbaren Energievorrichtung 2.

Der Innenrüttler 1 weist einen Bedienungsschlauch 3 auf, an dessen einem Ende eine als Gehäuse dienende Rüttelflasche 4 angebracht ist. Im Inneren der Rüttelflasche 4 ist ein Elektromotor 5 vorgesehen, der einen Unwuchterreger 6 drehend antreibt. Der Unwuchterreger 6 kann z.B. eine Unwuchtwelle sein, auf der eine Unwuchtmasse exzentrisch angebracht ist, so dass bei Rotation der Unwuchtwelle Schwingungen erzeugt werden, die über die Gehäuseaußenwand der Rüttelflasche 4 in den zu verdichtenden Beton eingeleitet werden. Der Aufbau einer derartigen Rüttelflasche 4 mit Elektromotor 5 und Unwuchterreger 6 ist an sich bekannt.

Der Bedienungsschlauch 3 kann eine Länge von mehreren Metern aufweisen, so dass der Bediener die Rüttelflasche 4 bei der Verdichtungsarbeit auch über eine größere Entfernung in den zu verdichtenden Beton hängen kann. Die Fig. 1 ist im Übrigen nicht maßstäblich und gibt die reale Länge des Bedienungsschlauchs 3 nicht wieder.

An dem der Rüttelflasche 4 gegenüberliegenden Ende des Bedienungsschlauchs 3 ist eine Schalteinrichtung 7 angebracht, über die der Elektromotor 5 ein- und ausgeschaltet werden kann. Die Schalteinrichtung 7 kann auch als Ankopplungsstelle für eine Stromleitung 8 (Stromkabel) dienen. Die elektrischen Zuleitungen der Stromleitung 8 werden im Inneren des Bedienungsschlauchs 3 zu der Rüttelflasche 4 geführt, so dass der Bedienungsschlauch 3 auch die Funktion eines Schutzschlauchs übernimmt.

Am der Schalteinrichtung 7 gegenüberliegenden Ende der Stromleitung 8 kann ein in der Figur 1 nicht gezeigter Stecker in an sich bekannter Weise vorgesehen sein. Der Stecker kann in die Energievorrichtung 2 eingesteckt sein.

Bei dem in der Figur 1 gezeigten Beispiel sind wesentliche Teile der Energievorrichtung 2 an einer Tragvorrichtung 9 angeordnet, die mit Hilfe von Tragriemen 10 von einem Benutzer z.B. auf seinem Rücken getragen werden kann, ähnlich einem Rucksack. Dabei kann die Tragvorrichtung 9 einen Tragrahmen aufweisen, der die an ihm befestigten Komponenten zuverlässig trägt. Dies ist z.B. auch in der DE 10 2018 118 552 A1 beschrieben.

Auf der Tragvorrichtung 9 ist ein Akku 11 als elektrischen Energiespeicher befestigt. Der Akku 11 stellt einen zentralen Teil der Energievorrichtung 2 dar und kann wechselbar sein und bei Erschöpfung gegen einen frischen Akku 11 ausgewechselt werden.

Anstelle des Akkus 11 ist es auch möglich, eine elektrische Versorgung über das öffentliche Netz oder ein an der Baustelle bestehendes Netz bereitzustellen.

Weiterhin trägt die Tragvorrichtung 9 einen Umformer 12, der insbesondere den aus dem Akku 11 bezogenen Strom hinsichtlich Spannung und Frequenz in einer für den Elektromotor 5 geeigneten Weise umformt. Dieser umgeformte Strom wird dann von dem Umformer 12 über die Stromleitung 8 an den Elektromotor 5 geliefert.

Symbolhaft sind weiterhin an der Tragvorrichtung 9 eine Messeinrichtung 13 und eine Vibrationseinrichtung 14 angeordnet. Die Messeinrichtung 13 und die Vibrationseinrichtung 14 müssen nicht als körperlich separate Komponenten an der Tragvorrichtung 9 angeordnet sein. Sie können vielmehr auch in dem Akku 11 bzw. in dem Batteriemanagement des Akkus 11 oder auch in dem Umformer 12 oder auch an anderer Stelle angeordnet sein.

Räumlich getrennt ist eine als externe Einrichtung dienende Mobileinrichtung 15 vorgesehen, z.B. ein Smartphone oder ein Tablet, in dem eine Auswerteeinrichtung 16 vorgesehen sein kann. Die Messeinrichtung 13 und die Auswerteeinrichtung 16 bilden zusammen eine Verdichtungserkennungseinrichtung. Insbesondere kann die Auswerteeinrichtung 16 als Programm bzw. App auf der Mobileinrichtung 15 installiert sein.

Zur Kopplung der Mobileinrichtung 15 mit der Energievorrichtung 2 ist an dem Akku 11 eine Sende- und Empfangseinrichtung 17 vorgesehen. Mit Hilfe der Sende- und Empfangseinrichtung 17 kann eine als Kommunikationsschnittstelle dienende Datenübertragung 18 zu der Mobileinrichtung 15 und insbesondere zu der Auswerteeinrichtung 16 erreicht werden.

Die Messeinrichtung 13 und die Auswerteeinrichtung 16 bilden zusammen eine Verdichtungserkennungseinrichtung zum Erkennen eines Verdichtungsfortschritts im Beton. So ist die Messeinrichtung 13 in der Lage, die Stromaufnahme des Elektromotors 5 während des Verdichtungsbetriebs zu überwachen. Da moderne Ackusysteme häufig ein Batteriemanagementsystem aufweisen, das die Stromaufnahme sehr präzise dokumentiert, kann die Messeinrichtung 13 dementsprechend auch in dem Akku 11 integriert sein bzw. das dortige Batteriemanagementsystem nutzen. Die dabei anfallenden Daten werden über die Datenübertragung 18, z.B. eine Funkstrecke (Bluetooth), zu der Mobileinrichtung 15 und dort zu der Auswerteeinrichtung 16 übermittelt. Die Mobileinrichtung 15 stellt eine ausreichende Rechnerkapazität bereit, damit die Auswerteeinrichtung 16 die notwendigen Berechnungen durchführen kann. Z.B. kann die Auswerteeinrichtung 16 als App auf der Mobileinrichtung 15 installiert sein und die Berechnungen durchführen.

Wenn die Auswerteeinrichtung 16 erkennt, dass der Verdichtungsfortschritt zufriedenstellend ist und ein vorgegebener Verdichtungsgrad erreicht wurde, gibt die Auswerteeinrichtung 16 ein Signal an die Vibrationseinrichtung 14. Die Vibrationseinrichtung 14 ist in der Lage, ein geeignetes haptisches Rückmeldesignal zu erzeugen, das vom Bediener des Innenrüttlers haptisch wahrgenommen werden kann. Auch die Vibrationseinrichtung 14 muss nicht eine körperlich separate Komponente sein, sondern kann in die anderen Komponenten, insbesondere z.B. in den Umformer 12 bzw. in eine nicht dargestellte Steuerung des Umformers 12 integriert sein. Sie dient lediglich der funktionalen Aufgabe, das haptische Rückmeldesignal zu erzeugen.

Zu diesem Zweck kann das Signal von der Auswerteeinrichtung 16 über das Erreichen des vorgegebenen Verdichtungsfortschritts von der Sende- und Empfangseinrichtung 17 am Akku 11 empfangen und an den Umformer 12 weitergeleitet werden, der daraufhin die Drehzahl des Elektromotors 5 erhöht oder verringert. Die Erhöhung oder die Reduzierung der Drehzahl können dabei sprunghaft oder kontinuierlich erfolgen oder auch kombiniert mit variablen Zeiträumen, um dem Anwender den Fortschritt der Verdichtung mitzuteilen. Z.B. ist es möglich, durch die Änderung der Drehzahl Morsecode-artige Signale zu erzeugen, um den Bediener über den Fortschritt der Verdichtung zu informieren.

Die Veränderung der Motordrehzahl führt zu einer veränderten Schwingungsfrequenz am Innenrüttler 1. Da der Bediener den Innenrüttler 1 händisch am Bedienungsschlauch 3 oder an der Schalteinrichtung 7 führt, wird die veränderte Schwingungsfrequenz als Vibration direkt wahrgenommen und kann dann entsprechend vom Bediener interpretiert werden.

Erkennt das System, dass an der aktuellen Position des Innenrüttlers 1 bzw. der Rüttelflasche 4 keine weitere Verdichtung mehr möglich bzw. sinnvoll ist, kann ein sich wiederholendes Muster aus schwankenden Frequenzen eingestellt werden, um dem Bediener zu signalisieren, dass der Innenrüttler 1 an einer anderen Position weiter eingesetzt werden sollte. Der Bediener kann daraufhin die Rüttelflasche 4 mit Hilfe des Bedienungsschlauchs 3 in einen Bereich von noch unverdichtetem Beton bewegen.

Bei einer Variante kann die Vibrationseinrichtung 14 auch losgelöst von einer Änderung der Motordrehzahl eine eigenständige Schwingung erzeugen, ähnlich dem Vibrationsalarm bei einem Smartphone. Zu diesem Zweck kann die Vibrationseinrichtung 14 einen kleinen Unwuchterreger (nicht gezeigt) aktivieren, der z.B. an der Tragvorrichtung 9 oder auch an der Schalteinrichtung 7 vorgesehen ist, so dass der Bediener die Vibration mit seinem Rücken oder seinen Händen spüren kann.

Die Mobileinrichtung 15 ist nicht zwingend notwendig. Ebenso ist es möglich, die Auswerteeinrichtung 16 auch in die Energievorrichtung 2, z.B. in das Batteriemanagementsystem des Akkus 11 zu integrieren, wenn dort ausreichende Rechnerkapazitäten vorhanden sind.

Der Akku 11 kann in einer Weise ausgebildet sein, dass er mit dem angeschlossenen Umformer 12 sowie mit der Mobileinrichtung 15 kommunizieren kann. In dem Akku 11 können die nötigen Messvorrichtungen integriert sein, um die elektrische Leistungsaufnahme hinreichend genau abzutasten.

Die Kommunikation zwischen dem Akku 11 bzw. der Sende-Empfangseinrichtung 17 des Akkus 11 einerseits und der Mobileinrichtung 15 andererseits verläuft bidirektional über die Datenübertragung 18 (Kommunikationsschnittstelle), so dass die Ergebnisse der Berechnungen oder darauf basierende Signale von der externen Mobileinrichtung 15 an den Akku 11 bzw. auch an den damit verbundenen Umformer 12 zurückgemeldet werden können.

Im Ergebnis ist das Betonverdichtungssystem in der Lage, dem Benutzer spürbar zu signalisieren, dass an der aktuellen Position des Innenrüttlers 1 bzw. der Rüttelflasche 4 ausreichend verdichtet wurde. Dadurch kann der Verdichtungsprozess effizient durchgeführt werden.

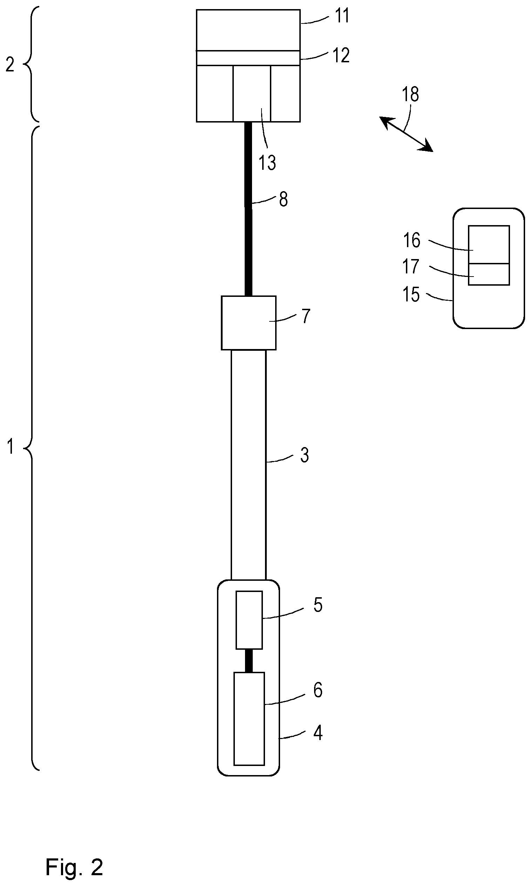

Fig. 2 zeigt in schematischer Darstellung ein anderes, jedoch zu Fig. 1 ähnliches Betonverdichtungssystem mit einem Innenrüttler 1 und einer Energievorrichtung 2. Gleiche bzw. ähnliche Merkmale der Betonverdichtungssysteme von Fig. 1 und 2 werden mit gleichen Bezugszeichen gekennzeichnet. Auf eine Wiederholung der Beschreibung der gleichen oder ähnlichen Komponenten kann verzichtet werden.

Symbolhaft sind in Fig. 2 an der Energievorrichtung 2 eine Stromerfassungseinrichtung 13, eine Auswerteeinrichtung 16 und eine Interpretationseinrichtung 17 vorgesehen. Diese Komponenten können auch an anderer Stelle des Innenrüttlers 1 bzw. der Betonverdichtungsvorrichtung angeordnet sein. Jedoch bietet sich ihre Anordnung in der Nähe des Akkus 11 bzw. des Umformers 12 an, um dort präzise den von dem Elektromotor 5 bezogenen Strom zu erfassen und zu interpretieren.

Die Stromerfassungseinrichtung 13, die Auswerteeinrichtung 16 und die Interpretationseinrichtung 17 müssen nicht als körperlich separate Komponenten vorhanden sein. Sie können vielmehr auch in dem Akku 11 bzw. in dem Batteriemanagement des Akkus 11 oder auch in dem Umformer 12 oder auch an anderer Stelle angeordnet sein. Z.B. können die Auswerteeinrichtung 16 und die Interpretationseinrichtung 17 räumlich auch an anderer Stelle angeordnet sein, z.B. als Softwareapplikation auf der als externen Einrichtung dienenden Mobileinrichtung 15 (z.B. Smartphone), die vom Bediener des Innenrüttlers mit sich geführt wird. In diesem Fall muss die Kommunikationsstrecke bzw. -schnittstelle in Form der Datenübertragung 18 bereitgestellt werden, um die von der Stromerfassungseinrichtung 13 erfassten Stromwerte an die Auswerteeinrichtung 16 zu übermitteln.

Die Stromerfassungseinrichtung 13 dient zum Erfassen des elektrischen Stroms, der durch den Elektromotor 5 aufgenommen wird. Dabei ist es möglich, den Strom in kurzen Abtastintervallen zu erfassen, um ein möglichst genaues Stromprofil zu erhalten.

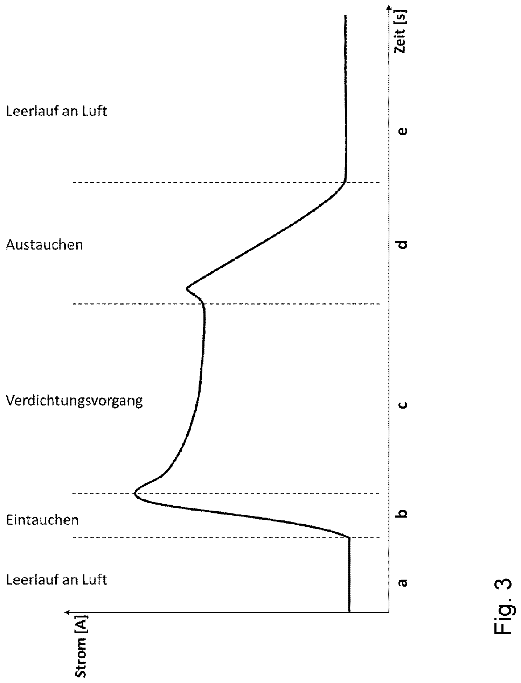

Die Messergebnisse der Stromerfassungseinrichtung 13 werden an die Auswerteeinrichtung 16 weitergegeben, die aufgrund des jeweils aktuell erfassten elektrischen Stroms (Stromwerte und Stromverlauf bzw. Stromgradient) jeweils einen Arbeitszustand des Innenrüttlers erfassen kann, wie nachfolgend noch anhand von Fig. 3 erläutert wird.

Die Interpretationseinrichtung 17 ist dafür vorgesehen, um den Stromverlauf während eines Verdichtungsvorgangs zu interpretieren. Insbesondere soll die Interpretationseinrichtung 17 den Verdichtungszustand während des Verdichtungsvorgangs erkennen und klassifizieren.

Wenn die Interpretationseinrichtung 17 feststellt, dass der Beton aktuell ausreichend verdichtet wurde, kann über eine nicht dargestellte Signaleinrichtung ein Signal für den Bediener des Innenrüttlers 1 gegeben werden, damit er die Verdichtung an der entsprechenden Stelle beendet und an anderem Ort fortführt.

Die Information über den Verdichtungszustand kann dem Bediener in verschiedener Weise übermittelt werden. Z.B. können dem Bediener über Assistenzsysteme, z.B. auf Smartphones installierten Applikationen, die entsprechenden Daten angezeigt werden. Zudem ist auch ohne Weiteres eine Protokollierung der Messergebnisse für die spätere Dokumentation möglich.

Fig. 3 zeigt beispielhaft den Verlauf des von dem Elektromotor 5 bezogenen Stroms über der Zeit während verschiedener Arbeitszustände des Innenrüttlers 1. Die jeweiligen Stromwerte können durch die Stromerfassungseinrichtung 13 mit kurzen Abtastintervallen erfasst werden.

Während der Phase a läuft der Innenrüttler an der Luft und ist nicht in den Beton eingetaucht (Leerlaufphase, Betreiben des Elektromotors im Leerlauf, Positionieren des Rüttelgehäuses an der Luft). In dieser Phase ist der aufgenommene Strom konstant niedrig.

Während des Eintauchens des Rüttelgehäuses in den Beton (Phase b) steigt die Stromaufnahme an und erreicht ein detektierbares Maximum.

Verweilt der Innenrüttler anschließend im Beton (Verdichtungsvorgang), wird der Beton im Wirkungsbereich der Rüttelflasche 4 verdichtet (Phase c). Dabei ist ein teilweise abfallender Stromverlauf zu erkennen, mit einem negativen Stromgradienten.

Anhand des sich ändernden Stromgradienten (Stromabfall) kann durch die Auswerteeinrichtung 16 im Zusammenspiel mit der Interpretationseinrichtung 17 auf den Fortschritt des Verdichtungsvorgangs geschlossen werden. Je weiter die Verdichtung voranschreitet, desto flacher wird der Kurvenverlauf, d.h. der Stromgradient geht gegen Null. Der aufgenommene Strom bleibt dabei stets höher als in der Leerlaufphase an der Luft (Phase a), so dass sich die Zustände Leerlauf (Phase a) und "Eingetaucht" bzw. "Verdichtung" (Phase c) stehts klar voneinander unterscheiden lassen.

Beim Austauchen der Rüttelflasche 4 aus dem Beton (Phase d) ist ein kurzer Anstieg des Stroms durch die Positionsänderung der Rüttelflasche 4 zu beobachten. Im Anschluss daran fällt der aufgenommene Strom bis auf den dem Leerlauf entsprechenden Wert zurück, sobald sich der Innenrüttler wieder an der Luft befindet. Schließlich geht die Stromaufnahme erneut in die Leerlaufphase (Phase e) über.

Insbesondere bei einer in einem Rucksacksystem tragbar vorgesehenen Energievorrichtung mit einem Energiespeicher, der zum Betrieb von Innenrüttlern genutzt werden kann, sind in der Regel bereits Messvorrichtungen, z.B. in der Batteriesteuerelektronik, vorhanden, mit denen die Eingangsleistung in Form von Strom und Spannung zum Betrieb des Innenrüttlers gemessen werden können. Eine zusätzliche Sensorik, insbesondere in der Rüttelflasche oder dem Schutzschlauch ist dabei nicht erforderlich.

Durch die hohe Messgenauigkeit und Abtastrate ist es möglich, aus dem Stromverlauf auf den Arbeitszustand (Leerlauf, Eintauchen, Verweilen, Austauchen) sowie den Verdichtungsfortschritt des Innenrüttlers im Beton zu schließen. Zur Ermittlung des jeweiligen Arbeitszustands werden die gemessenen Werte bzw. deren Verläufe und Änderungen mit bekannten Werten bzw. Mustern verglichen.

Die Messungen können bei akkubetriebenen Innenrüttlern, aber auch bei netzbetriebenen Innenrüttlern in geeigneter Weise realisiert werden.

Das Verdichtungssystem erlaubt eine Vielzahl von Kombinationen und Arbeitsweisen, die in Ergänzung und Vertiefung des Vorstehenden nachfolgend erläutert werden.

Während das System aus Akku und Frequenzumrichter (der angeschlossenen Innenrüttler wird als Aktor betrachtet und kann vom Anwender zu bzw. abgeschaltet werden) aktiv ist, werden der Stromfluss sowie die Eingangsspannung mit einer hohen Abtastrate erfasst. Die hierfür notwendige Messtechnik kann im Batteriemanagementsystem oder alternativ im Frequenzumrichter untergebracht sein.

Für die Interpretation können die gemessenen Daten mittels der Kommunikationsschnittstelle im Akkusystem an ein weiteres, beim Anwender bereits vorhandenes Gerät (z.B. Smartphone, Computer, Smartwatch oder Ähnliches) gesendet werden, das über die notwendige Rechenleistung sowie eine geeignete Anwendung zur Auswertung verfügt. Je nach Art der Auswertung sind Rechenoperationen und/oder Vergleichsoperationen mit hinterlegten Profilen, insbesondere Strom- bzw. Stromverlaufsprofilen möglich.

Bei Geräten mit Netzbetrieb können die Messvorrichtung und die Kommunikationsschnittstelle im Umformer integriert sein.

Das externe Gerät (externe Einrichtung) kann gleichzeitig als erweiterte Mensch-Maschine Schnittstelle zur Anzeige sowie zur Abfrage von Informationen und Randbedingungen dienen, die zur Ermittlung des Verdichtungsfortschritts sowie zu dessen Dokumentation erforderlich sind, beispielsweise die Betonkonsistenz oder der verwendete Typ von Innenrüttler.

Auch das Erreichen eines für die Anwendung passenden Verdichtungsgrades kann über das externe Gerät signalisiert werden, insbesondere akustisch, optisch, oder durch Nutzung eines Vibrationserzeuger, falls dieser im Gerät vorhanden ist.

Der Anwender kann auch darüber informiert werden, wenn der letzte Verdichtungsvorgang (beginnend mit dem Eintauchen des Innenrüttlers und endend mit dem Austauchen) nicht ausreichend oder fehlerhaft war, sodass er diesen bei Bedarf wiederholen kann.

Eine Dokumentation kann beispielsweise durch die Aufzeichnung der Anzahl der Verdichtungsvorgänge sowie die Bewertung, welche Verdichtungsvorgänge erfolgreich waren, ermöglicht werden. Durch Nutzung der Internetverbindung des externen Geräts können die Verdichtungsdaten an weitere Geräte oder eine entsprechende Cloud übertragen werden. Dadurch wird neben der zentralen Dokumentation auch eine simultane Kontrolle des Verdichtungsprozesses und eine laufende Anpassung möglich.

Im Gegensatz zu dem in EP 2 574 916 A2 beschriebenen Konzept erfolgt die Ermittlung der Verdichtungsqualität nicht nur anhand der Einschaltdauer des Innenrüttlers, sondern anhand der Ermittlung des Verdichtungsfortschritts und des Zustands des Geräts basierend auf der Interpretation des Stromverlaufs sowie mit den vom Anwender angegebenen Daten zum verwendeten Innenrüttler und zur Betonsorte bzw. Betonkonsistenz.

Die Kommunikation zwischen Akku und externem Gerät kann bidirektional verlaufen, sodass die Ergebnisse der Berechnungen oder darauf basierende Signale vom externen Gerät an den Akku bzw. auch an den damit verbunden Frequenzumformer zurückgemeldet werden können.

Bei Verdichtungssystemen mit Netzbetrieb, also ohne Akku, kann die Messung der Parameter im Frequenzumrichter erfolgen, mit einer direkten Kommunikation an die externe Einrichtung.

Auch ist eine Messung der Parameter im Frequenzumrichter möglich, wobei die Daten über den Akku an die externe Einrichtung kommuniziert werden können. Der Akku übernimmt in diesem Fall die Rolle eines Gateways.

Beim Bestimmen des Verdichtungsfortschritts kann zum Auswerten und Interpretieren der Stromwerte bzw. -profile künstliche Intelligenz oder Maschinenlernen eingesetzt werden.

Bei einer Variante ist eine automatische Identifikation des angeschlossenen Rüttelflaschentyps anhand hinterlegter Profile für den Stromverlauf (Lauf an Luft / Anstieg im Beton) möglich. In diesem Fall ist keine Nutzereingabe erforderlich, sofern die Innenrüttlertyp dem System bekannt sind.

Weiterhin kann bei einer Variante die Betonsorte anhand des sich ergebenden Stromverlaufs erkannt werden. Auch hier ist dann keine Nutzereingabe erforderlich.

Die Daten können in einem externen Netzwerk bzw. einer Kombination aus vernetzten Systemen bzw. einer Cloud ausgewertet und verarbeitet werden.

Die Interpretation und/oder Dokumentation des Verdichtungsfortschritts von Geräten zur Bodenverdichtung (Vibrationsplatten, Vibrationsstampfer, Vibrationswalzen) ist anhand des gemessenen Stromverlaufs möglich.

Insbesondere kann die Bestimmung des Verdichtungsfortschritts und/oder des Zustands von Verdichtungsmaschinen anhand gemessener elektrischer Parameter und entsprechender Rechen- und Vergleichsoperationen erfolgen.

Die Ermittlung der Verdichtungsqualität kann dabei durch Abhängigkeitssimulation von stellvertretenden Messgrößen, insbesondere anhand des im bestehenden Akkusystem erfassten Stromverlaufs durchgeführt werden. Die Abhängigkeit des Stromverlaufs bzw. der aufgenommenen Leistung des Innenrüttlers im Verhältnis zum Verdichtungsgrad wird von mehreren Parametern beeinflusst. Wenn alle Parameter bekannt sind (z.B. die Kennlinie des verwendeten Innenrüttlers), kann der aktuelle Verdichtungsgrad basierend auf den bekannten und aktuell gemessenen Werten berechnet bzw. simuliert werden.

Erfindungsgemäß können Messvorrichtungen benutzt werden, die ohnehin z.B. zum Eigenschutz in den entsprechenden Geräten (z.B. Innenrüttlern) verbaut sind. Dadurch ist es möglich, auf zusätzliche Sensorik in der Rüttelflasche oder im Schutzschlauch zu verzichten.

Dabei ist eine weitgehend automatisierte Dokumentation von Betonverdichtungsprozessen mit Innenrüttlern möglich, ohne den Einsatz von aufwändiger Zusatzhardware. Auch der Einsatz von bereits vorhandenen Innenrüttlern wird möglich, da keine Nachrüstung von Sensorik erforderlich ist. Die notwendigen Rechenoperationen können auf einem externen Endgerät, z.B. einem Smartphone, durchgeführt werden

Das Verdichtungssystem kann eine Grundlage für Assistenzsysteme darstellen, die dem Benutzer signalisieren, dass an der aktuellen Position des Innenrüttlers ausreichend verdichtet wurde. Dadurch kann eine Effizienzsteigerung beim Verdichtungsprozess und eine erhöhte Sicherheit für tragende Bauteile erzielt werden.

Ein wesentlicher Gedanke ist dabei die Nutzung von Rechenleistung, die der Anwender meist ohnehin mit sich führt, z.B. in Form seines Smartphones. Dadurch entfallen für die Rechenleistung, die insbesondere für die Auswerteeinrichtung und ggfs. die Interpretationseinrichtung notwendig ist, keine weiteren Kosten. Ressourcen können gespart werden.

## Patentansprüche

1. Verdichtungssystem zum Verdichten eines Mediums, mit
- einer Verdichtungsvorrichtung (1) mit einem Elektromotor (5) zum Erzeugen einer Verdichtungsbewegung;
- einer Energievorrichtung (2) zum Bereitstellen von elektrischer Energie für den Elektromotor (5);
- einer Messeinrichtung (13) zum Messen eines von dem Elektromotor (5) bezogenen Stroms; und mit
- einer Auswerteeinrichtung (16) zum Auswerten des von der Messeinrichtung (13) gemessenen Strombezugs und daraus Bestimmen eines Verdichtungsfortschritts im zu verdichtenden Medium;
wobei
- die Auswerteeinrichtung (16) wenigstens teilweise in einer externen Einrichtung (15) angeordnet ist, räumlich getrennt von der Energieeinrichtung (2) und/oder der Verdichtungsvorrichtung (1).

2. Verdichtungssystem nach Anspruch 1, wobei
- die Energievorrichtung (2) eine Batterie (11) aufweist;
- die Batterie (11) eine Batterie-Steuerelektronik aufweist, die räumlich eine Einheit mit der Batterie (11) bildet;
- die Messeinrichtung (13) wenigstens teilweise in die Batterie-Steuerelektronik integriert ist.

3. Verdichtungssystem nach einem der vorstehenden Ansprüche, wobei
- die Energievorrichtung (2) einen Umformer (12) aufweist, zum Umwandeln eines von der Energievorrichtung (2) bezogenen Stroms in einen für den Elektromotor (5) geeigneten Strom;
- der Umformer (12) eine Umformer-Steuerelektronik aufweist, die räumlich eine Einheit mit dem Umformer (12) bildet;
- die Messeinrichtung (13) wenigstens teilweise in die Umformer-Steuerelektronik integriert ist.

4. Verdichtungssystem nach einem der vorstehenden Ansprüche, wobei die Auswerteeinrichtung (16) ausgebildet ist zum Bestimmen eines Arbeitszustands der Verdichtungsvorrichtung (1) aufgrund des jeweils aktuell durch die Messeinrichtung (13) erfassten elektrischen Stroms.

5. Verdichtungssystem nach einem der vorstehenden Ansprüche, wobei die Auswerteeinrichtung (16) ausgebildet ist, um den jeweiligen Arbeitszustand unter Berücksichtigung des jeweils aktuell erfassten elektrischen Stroms und/oder eines jeweils bestimmbaren Stromgradienten zu bestimmen.

6. Verdichtungssystem nach einem der vorstehenden Ansprüche, wobei die Auswerteeinrichtung (16) ausgebildet ist zum Erkennen, ob ein vorgegebener Verdichtungsfortschritt erreicht wurde.

7. Verdichtungssystem nach einem der vorstehenden Ansprüche, wobei eine Kommunikationsschnittelle (18) zwischen der Messeinrichtung (13) und der Auswerteeinrichtung (16) vorgesehen ist, zum Hin- und/oder Rückübertragen von Daten zwischen der Messeinrichtung (13) und der Auswerteeinrichtung (16).

8. Verdichtungssystem nach einem der vorstehenden Ansprüche, wobei die externe Einrichtung (15) eine Mensch-Maschine-Schnittstelle aufweist, zum Anzeigen von Information für einen Bediener und/oder zum Abfragen von Information von dem Bediener.

9. Verdichtungssystem nach einem der vorstehenden Ansprüche, wobei
- eine Signaleinrichtung vorgesehen ist, zum Erzeugen eines Signals für den Bediener;
- die Signaleinrichtung ausgebildet ist, um das Signal in Abhängigkeit von einem Verfahrenszustand zu erzeugen; und wobei
- wobei der Verfahrenszustand ausgewählt ist aus der Gruppe
+ Verdichtungsziel erreicht
+ Verdichtungsziel noch nicht erreicht
+ Verdichtung fehlerhaft
+ Fehlermeldung.

10. Verdichtungssystem nach einem der vorstehenden Ansprüche, wobei eine Dokumentationseinrichtung vorgesehen ist, zum Aufzeichnen von Daten, die durch die Messeinrichtung (13) und die Auswerteeinrichtung (16) generiert worden sind.

11. Verdichtungssystem nach einem der vorstehenden Ansprüche, wobei eine Identifikationseinrichtung (17) vorgesehen ist, zum Identifizieren der Verdichtungsvorrichtung aufgrund von vordefinierten Profilen für den Stromverlauf.
